# DEMANDE DE BREVET EUROPEEN

(11) **EP 0 973 273 A1**
(43) Date de publication de la demande: **19.01.2000**
(21) Numéro de dépôt: 99401637.6
(22) Date de dépôt: 01.07.1999
(51) Int. Cl.: H04B 7/005

(54) **Procédé de transmission dans des fenêtres successives**

(30) Priorité: 16.07.1998 FR 9809102
(71) Demandeur: ALCATEL, 75008 Paris (FR)
(72) Inventeur: Genest, Pierre, 95430 Butry Sur Oise (FR); Parisel, Arnaud, 75017 Paris (FR)
(74) Mandataire: Lamoureux, Bernard

(57) **Abrégé**

On résout des problèmes d'émission du bruit en téléphonie mobile, lors d'émissions dans des fenêtres temporelles (A-B) successives, en faisant évoluer la puissance d'émission, d'une manière monotone (5), d'une valeur antérieure à une valeur nouvelle. On montre qu'en agissant ainsi on peut augmenter le débit de transmission.

## Description

La présente invention a pour objet, dans un système de radiocommunications, un procédé de transmission dans des fenêtres temporelles successives au sein d'une trame de transmission, notamment une trame de type TDMA (Time Division Multiple Access). L'invention est ainsi en particulier relative au domaine de la téléphonie mobile concerné par le partage temporel (par opposition au partage fréquentiel de type FDMA ou au partage par codage de type CDMA). Elle conceme bien entendu les systèmes de partage mixte où au moins un partage temporel est impliqué. Elle intéresse autant les transmissions effectuées par des stations de base que celles effectuées par des téléphones mobiles. Elle vise principalement dans ce domaine les transmissions à haut débit.

On connaît dans le domaine des radiocommunications la répartition temporelle de canaux de communication différents, dans des fenêtres temporelles successives organisées au sein d'une même trame. Classiquement on reconnaît dans une trame, notamment une trame de type GSM (Global System for Mobile), huit fenêtres temporelles (Time Slot, TS0 à TS7). Un canal de communication entre un premier mobile et une station de base est ainsi normalement affecté à une même fenêtre temporelle dans plusieurs trames successives. Par ailleurs un canal de transmission est également relatif à une fréquence de porteuse utilisable pendant cette fenêtre temporelle. Pour une même fenêtre temporelle, d'une trame à une trame suivante, et donc pour un même canal de transmission (une même communication entre le mobile et la station de base), la fréquence de porteuse peut cependant changer par saut de fréquence selon une planification évolutive.

Il résulte de cette façon de faire qu'une fréquence de porteuse pourrait être utilisée par un canal dévolu à un premier mobile pendant une fenêtre temporelle, et que cette même fréquence de porteuse pourrait être utilisée, mais par un autre canal dévolu à un deuxième mobile, pendant une fenêtre temporelle suivante dans la même trame. Cet autre canal servirait par exemple à acheminer une communication entre ce deuxième mobile et la même station de base que celle qui gouverne la zone géographique où se situent le premier mobile. Il se pourrait néanmoins que le deuxième mobile trafique avec une autre station de base.

Pour éviter que des queues de signal résultant de l'émission dans un premier canal pendant une fenêtre temporelle précédente ne nuise, sous forme de bruits, à la transmission d'un message pendant une fenêtre temporelle suivante (et qui emprunterait fortuitement une même fréquence porteuse), une recommandation prévoit que le signal émis pendant une fenêtre temporelle soit très rapidement décroissant en puissance à la fin de cette fenêtre.

En pratique le phénomène de bruitage évoqué ci-dessus peut ne pas être rencontré compte tenu de ce que la recommandation impose d'une part un affaiblissement du signal émis pendant la fenêtre temporelle suivante à un niveau inférieur d'environ 36 dB à celui de la fenêtre temporelle précédente. D'autre part, la recommandation prévoyait aussi qu'une fenêtre temporelle immédiatement suivante ne devait pas utiliser la même fréquence que celle qui avait été utilisée, pour une autre communication, pendant une fenêtre temporelle précédente.

Cependant la présence de plusieurs opérateurs agissant simultanément dans une même zone géographique, ou la liberté prise par ceux-ci vis à vis de la planification recommandée des sauts de fréquence, peut conduire à des situations où des phénomènes d'occupation de mêmes bandes se réalisent pour des fenêtres temporelles immédiatement successives. La conséquence de cette situation est un durcissement de la recommandation pour empêcher la production de bruits résultant des messages émis pendant une fenêtre temporelle, sur les fenêtres temporelles qui la suivent.

Le principe de la mesure de l'atténuation auquel doivent ainsi souscrire les systèmes à partage temporel consiste à mesurer pendant une fenêtre temporelle suivante, une composante spectrale décalée, par exemple décalée de 400 KHz dans le cadre du GSM, par rapport à la fréquence de la porteuse utilisée dans la fenêtre temporelle précédente. Cette valeur de 400 KHz est due à ce que les canaux occupent chacun un espace de 200 KHz, et à ce que la bande immédiatement voisine est normalement inemployée. Bien entendu, il y a des bruits qui se développent à d'autres fréquences mais pour les prendre tous en considération, la recommandation a admis de faire la mesure pendant la fenêtre temporelle suivante à une seule fréquence, décalée de 400 KHz, pour révéler l'extinction des émissions parasites et la conformité du matériel à la recommandation.

Dans le but de souscrire à cette exigence, au début de chaque fenêtre temporelle la puissance d'émission du téléphone mobile ou de la station de base, doit être progressivement portée à sa valeur nominale. Et à la fin de la fenêtre temporelle elle doit être portée à zéro. Ces modifications de puissance d'émission, si elles sont trop brutales, apparaissent cependant comme des générateurs de bruit dont le spectre haute fréquence est alors particulièrement fourni. En conséquence une montée, ou une descente, trop rapide est significative d'une émission d'harmoniques hautes fréquences qui sont gênants. Pour remédier à ce problème, il est prévu que la forme de montée en amplitude de la puissance nominale d'émission suive une courbe progressive, par exemple en cosinus, sur une durée très courte. La même chose se produit à l'extinction. Pendant la montée et la descente de la puissance, le débit des bits utiles est neutralisé.

Lorsqu'on veut, à partir d'un même téléphone mobile, ou d'une même station de base, émettre pendant deux fenêtres temporelles successives, notamment dans les cas où on veut retenir une transmission à haut débit on est ainsi amené, pour respecter la recommandation, à imposer le retour à zéro de la valeur nominale d'émission dans les instants qui séparent deux fenêtres temporelles successives. Ce retour à zéro réduit le débit utile par la neutralisation qu'il nécessite.

Le but de l'invention est de réduire au maximum les parasites et donc de respecter la recommandation notamment dans le cas où on utilisera deux, voire trois ou plus, fenêtres temporelles successives, à partir d'une même station de base ou d'un même téléphone mobile, pour transmettre un flot de données, notamment dans une utilisation à haut débit. Pendant les fenêtres temporelles successives, éventuellement, la fréquence pourra subir un saut ou rester la même si la planification de fréquence dans la zone le permet.

Selon l'invention ce problème est résolu en provoquant, au moment où on passe d'une fenêtre temporelle à la suivante, une variation progressive monotone de la puissance d'émission de l'émetteur, cette variation monotone étant par conséquent différente de la décroissance en fin de fenêtre temporelle suivie d'une croissance au début d'une fenêtre temporelle suivante. Cette variation a pour effet de faire rejoindre pendant une fenêtre temporelle suivante directement le niveau nominal d'émission assigné à cette fenêtre suivante.

De préférence, pendant une fenêtre temporelle suivante on pourra ainsi transmettre à une puissance plus élevée que pendant une ou des fenêtres temporelles précédentes. Ceci aura deux conséquences, premièrement, du fait d'une puissance plus grande émise, les signaux émis pendant la deuxième fenêtre temporelle seront mieux protégés physiquement contre le bruit. Par conséquent le codage qu'ils subiront pourra être moins redondant, ce qui conduira à augmenter le débit utile dans la deuxième fenêtre temporelle par rapport au débit utile dans la première fenêtre temporelle. Comme deuxième conséquence, on pourra atteindre avec la deuxième fenêtre temporelle un niveau de puissance nominale plus élevé alors que si on avait voulu atteindre ce niveau de puissance nominale à partir d'une puissance nulle, la pente de la montée en puissance aurait été trop raide et aurait conduit à l'émission de parasites interdits.

On montre en plus qu'en agissant ainsi, c'est-à-dire en ne souscrivant pas à un passage par zéro de la puissance d'émission mais en passant par une marche d'escalier monotone de la puissance d'émission de la première fenêtre temporelle à la puissance d'émission d'une deuxième fenêtre temporelle, on produit nettement moins de parasites, et donc qu'on souscrit d'autant mieux à la recommandation.

En conséquence l'invention a pour objet un procédé d'émission de données dans un système de radiocommunications, dans plusieurs fenêtres temporelles successives au sein d'une trame de transmission, notamment une trame de type TDMA, caractérisé en ce qu'on modifie d'une manière monotone la puissance d'émission d'un émetteur entre une fenêtre temporelle et une fenêtre immédiatement suivante au cours d'une même trame.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figures 1a et 1b : des représentations d'amplitude nominale de puissance d'émission, pour une station de base ou un téléphone mobile, dans l'état de la technique et selon l'invention respectivement pour deux fenêtres temporelles successives au cours d'une même trame ;
- Figure 2 : la représentation des moyens nécessaires pour mettre en oeuvre une montée en puissance calibrée conformément à une évolution produisant le moins de bruit possible ;
- Figure 3 : un exemple préféré de réalisation d'une courbe calibrée de montée en puissance.

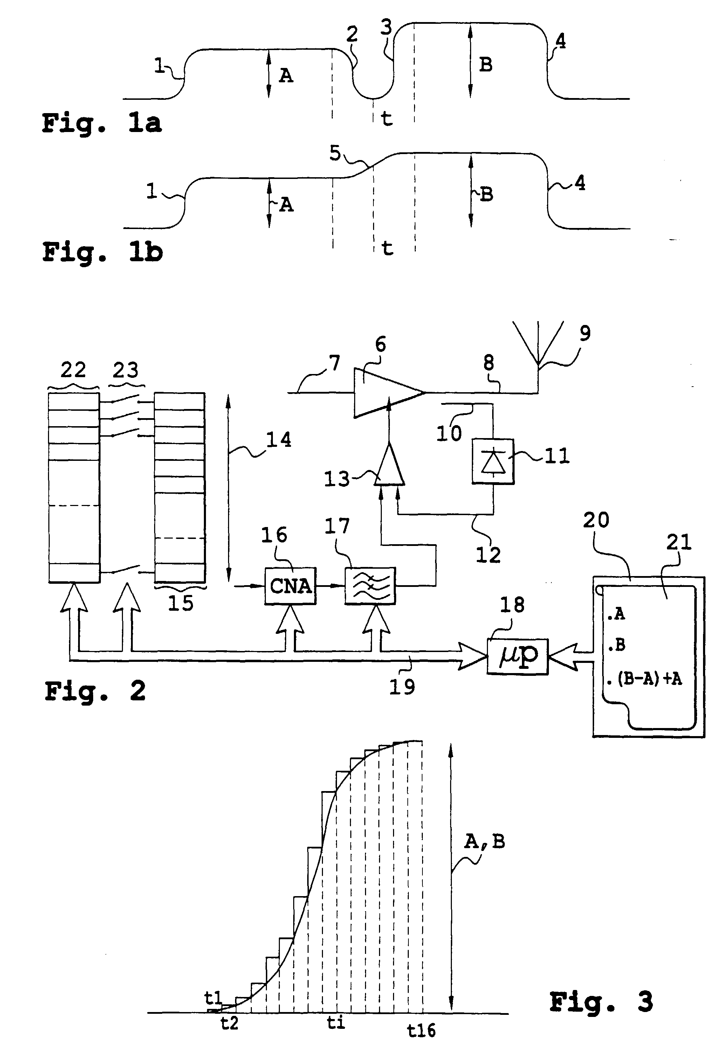

Les figures 1a et 1b montrent, dans l'état de la technique et dans l'invention respectivement, la différence des puissances nominales imposables dans des fenêtres temporelles successives lorsqu'une même station de base, ou lorsqu'un même téléphone mobile veut continuer à émettre d'une fenêtre à l'autre. Sur la figure la, pendant une première fenêtre temporelle la puissance nominale d'émission était limitée par "A". Cette valeur, d'une manière connue, résulte d'un échange entre la station de base et le téléphone mobile. Lors de cet échange la station de base fixe au téléphone mobile une puissance nominale avec lequel il doit émettre pour que son message soit reçu correctement. Ou réciproquement. Pour le canal considéré, la station de base et le téléphone mobile s'astreignent ainsi à une assignation A en puissance. L'assignation peut être différente pour la station de base de ce qu'elle est pour le téléphone mobile. Ce qui compte est qu'elle existe. La fenêtre temporelle à amplitude A commence par une montée en puissance 1 et se termine par une descente de puissance 2. La fenêtre temporelle suivante, à amplitude nominale B, commence par une montée en puissance 3 et se termine par une descente en puissance 4.

Dans l'invention, figure 1b, on retrouve les mêmes éléments sauf que la descente en puissance 2 et la montée en puissance 3 sont remplacées par une variation monotone 5 par laquelle la puissance nominale d'émission évolue directement du niveau A au niveau B. Sur les figures 1a à 1b, on a montré un cas préféré où, pendant la fenêtre temporelle suivante, l'amplitude B est supérieure à l'amplitude A. Cependant rien n'empêche que pendant la fenêtre temporelle suivante elle lui soit inférieure. Dans ce cas également, la décroissance serait monotone en ce sens qu'elle ne serait pas constituée d'une décroissance jusqu'à zéro suivie d'une croissance comme la décroissance 2 et la croissance 3.

Les raisons pour lesquelles cette manière de faire selon l'invention est moins bruyante que celle de l'état de la technique sont les suivantes. D'une part la variation 5 est inférieure à l'addition, en valeur absolue des variations 2 et 3. Par conséquent les parasites hautes fréquences, les harmoniques, sont produits en moins grande quantité avec l'invention qu'avec la technique ancienne. D'autre part, à l'instant t de passage d'une fenêtre temporelle à la suivante, la puissance d'émission du mobile ou de la station de base est encore de A pour devenir B alors que dans l'état de la technique cette amplitude d'émission est nulle. Cette situation n'est cependant pas gênante. En effet, si pendant la fenêtre temporelle suivante le canal suivant utilise la même fréquence que le canal précédent, on ne peut plus considérer qu'il y aurait des parasites. En effet dans ce cas, il s'agirait d'un autoparasitage, la fréquence de porteuse étant réservée à la communication en cours. Donc de ce point de vue il n'est pas gênant que pendant le début de la période à amplitude B les signaux continuent à être émis à la même fréquence puisque justement cette fréquence est assignée au canal.

Dans un protocole de transmission de l'état de la technique, on n'utilise normalement pas la période intermédiaire correspondant aux décroissance 2 et croissance 3, entre deux fenêtres temporelles successives, pour émettre des bits significatifs. En effet dans cette période intermédiaire, un signal de puissance est normalement modulé par des bits non significatifs car ils ne sont normalement pas bien reçus, du fait du passage par zéro du signal de puissance. Avec l'invention, et sous réserve de modifier les protocoles existants, il devient possible d'exploiter cette durée intermédiaire pour envoyer des bits significatifs de données à transmettre en modulant en conséquence le signal d'émission. Dans ce cas, on peut encore plus augmenter le débit d'informations transmises.

La figure 2 montre, d'une manière schématique, des moyens utilisés pour assigner une puissance nominale d'émission à un émetteur pendant une fenêtre temporelle. La figure 3 montre la courbe calibrée que doit respecter, au moment d'une montée 1 ou 3, le gain d'un amplificateur de puissance pour provoquer le moins de parasites possibles. Sur la figure 3 on a montré ainsi qu'au début d'une fenêtre temporelle pendant le temps de montée, on constituait un certain nombre d'étapes, ici seize, au cours desquels le gain allait être porté successivement à des valeurs de plus en plus fortes pour atteindre la valeur nominale A ou B. La forme de la courbe 3 est connue. Elle est par exemple du type cosinus.

Le principe connu de cette assignation est le suivant. Un amplificateur 6 reçoit sur une entrée 7 le signal à émettre et le transmet, à sa sortie 8, à un aérien 9 de radiodiffusion. En sortie 8, un capteur 10 relié à un détecteur 11 permet de produire sur une sortie 12 du détecteur 11 un signal représentatif de l'amplitude effective du signal émis sur l'aérien 9. Le signal disponible à la sortie 12 est introduit dans une première entrée d'un comparateur 13 qui reçoit par ailleurs sur une deuxième entrée un signal de consigne. Le signal de consigne est produit par une lecture 14 d'une mémoire de consigne 15. La mémoire de consigne 15 comporte ainsi plusieurs enregistrements, ici seize, en nombre égal au nombre de périodes avec lesquelles on a décidé de morceler le temps de montée de la puissance d'émission conformément à la figure 3. Les valeurs lues dans les enregistrements correspondent aux niveaux à respecter selon la courbe de la figure 3.

Dans un exemple, la mémoire 15 est une mémoire numérique et au cours de la lecture 14 les contenus des cellules mémoires de cette mémoire sont transmis à un convertisseur numérique analogique 16 lui-même en relation avec un filtre passe bas 17. La sortie du filtre passe bas 17 est relié à la deuxième entrée du comparateur 13. La figure 3 montre d'une manière symbolique, au cours de seize étapes t1 à t16 qu'à chaque étape ti correspond un niveau quantifié imposable pour l'amplitude A (ou B) et un niveau lissé en tirets provoqué par le filtre 17.

Ce fonctionnement est connu de l'état de la technique et la lecture 14 de la mémoire 15 est organisée sous le séquencement d'un microprocesseur 18 relié par un bus de commande 19 à ces différents organes. Par exemple pour la montée 1 la mémoire 15 est lue dans un sens alors que pour la descente 2 la même mémoire sera lue dans l'autre sens. Le programme mis en oeuvre par le microprocesseur 18 est contenu dans une mémoire 20. Ce programme 21 a pour objet de multiplier par une valeur A (celle assignée à la communication entre le mobile et la station de base) des valeurs normalisées et correspondant à la courbe de la figure 3. Par exemple dans le programme 21 on a symboliquement représenté par une instruction A cette multiplication qui correspond à la première fenêtre temporelle de la figure la. On a également représenté par une instruction B l'assignation de puissance qui correspond à la deuxième fenêtre temporelle de la figure 1a. Dans les deux cas la mémoire 15 sera lue dans un sens, puis dans un autre.

Dans l'invention le programme 21 est modifié pour comporter en plus une instruction particulière notée (B-A)+A. Ceci signifie que pendant la période suivante on multipliera les coefficients normalisés relatifs à la figure 3 par la valeur B-A (au lieu de les multiplier par A, ou B) et on ajoutera à ces résultats de multiplication la valeur A de la fenêtre précédente. Dans ces conditions, on obtiendra la croissance monotone 5 (ou une décroissance si B est inférieur à A).

Bien entendu, il est possible de généraliser ce fonctionnement en prévoyant une succession de trois fenêtres temporelles successives au lieu de deux, voire une succession des huit fenêtres temporelles successives d'une même trame, et même de plusieurs trames successivement. A chaque changement de fenêtre temporelle, la troisième instruction serait mise en oeuvre pour imposer une variation monotone 5 qui soit fonction de la puissance dans une fenêtre temporelle précédente et de la puissance dans une fenêtre temporelle suivante.

Ce mode de fonctionnement peut présenter cependant des difficultés, notamment pour le chargement de la mémoire 15 avec les valeurs à imposer pendant les temps de montée, temps de transition et temps de descente. Dans l'état de la technique en effet les valeurs de A ou B changent peu, de sorte que la mémoire 15 est chargée une fois pour toutes, au moins pour une période assez longue.

Pour simplifier l'explication, les valeurs de réglage sont transmises par le bus 19 et leur transit sur ce bus, qui doit se passer très rapidement, est en lui-même générateur de bruit. Pour éviter cette difficulté, dans l'invention on prévoit que la mémoire 15 sera associé à une anté-mémoire 22 dans laquelle seront chargés, à un rythme lent, les coefficients des cellules de la mémoire 15 utilisable aux temps de montée 1, à la transition 5, ou au temps de descente 4 suivant. Au début de ces temps de montée, temps de transition ou temps de descente, on provoque alors un chargement instantané de la mémoire 15 à partir du contenu de la mémoire 22 qui elle a été chargée lentement. Ce chargement est représenté symboliquement par une batterie 23 d'interrupteurs reliant respectivement chacune des cellules mémoires de la mémoire 15 à des cellules mémoires correspondantes de l'anté-mémoire 22. Ces interrupteurs sont commandés par un ordre dispensé par le microprocesseur 18 sur le bus 19. Le chargement instantané de la mémoire 15 à partir de l'anté-mémoire 22 n'est pas bruyant parce que les connexions de l'anté-mémoire 22 à la mémoire 15 sont réalisées à l'intérieur du circuit intégré qui comporte les éléments représentés sur la figure 2 et non pas sur un bus externe 19. Le changement de l'anté-mémoire 22 peut être lent en ce sens qu'on peut disposer de la moitié du temps de trame pour charger l'ante-mémoire 22 avec les coefficients de montée 1. A l'issue de cette moitié de temps de trame, la mémoire 15 est chargée d'un coup par action sur les interrupteurs. Pendant l'autre moitié du temps de trame l'ante-mémoire 22 est chargée avec les coefficients de la transition 5. Pendant les deux fenêtres temporelles on peut charger dans l'anté-mémoire 22 les coefficients de la descente 4.

En agissant ainsi, d'une part on réduit le bruit radioélectrique émis par l'aérien 9, d'autre part, on augmente la quantité de bits utiles transmis. C'est la raison pour laquelle l'invention est particulièrement adaptée aux hauts débits. Cette solution est bien entendu applicable tant aux mobiles qu'aux stations de base.

## Revendications

1. Procédé d'émission (9) de données (7) dans un système de radiocommunications, dans plusieurs fenêtres temporelles (A, B) successives au sein d'une trame de transmission, dans lequel on modifie d'une manière monotone (5) la puissance d'émission d'un émetteur entre une fenêtre temporelle et une fenêtre temporelle suivante au cours d'une même trame, caractérisé en ce que la modification est du type cosinus (t1-t16).

2. Procédé selon la revendication 1, caractérisé en ce que la modification est monotone croissante.

3. Procédé selon l'une des revendications 1 à 2, caractérisé en ce que la modification comporte une lecture (14) d'une mémoire (15) d'établissement de puissance et l'asservissement (13) de la puissance (8-12) d'émission à la valeur lue dans cette mémoire d'établissement.

4. Procédé selon la revendication 3, caractérisé en ce que la modification comporte le chargement d'une anté-mémoire (22) par un microprocesseur (18) pendant une durée d'une fenêtre temporelle et le transfert (23) du contenu de l'anté-mémoire dans la mémoire d'établissement avant la lecture de cette mémoire d'établissement.

5. Procédé selon l'une quelconque des revendications 1 à 4, caractérisé en ce que la modification comporte des multiplications ((B-A)+A) de valeurs normalisées par la différence des puissances entre les deux fenêtres temporelles successives, et l'addition de la puissance de la fenêtre précédente aux résultats de ces multiplications.

6. Procédé selon l'une quelconque des revendications 1 à 5, caractérisé en ce qu'on module un signal d'émission par des bits significatifs de données à transmettre pendant la modification monotone de la puissance d'émission.
